# EUROPEAN PATENT APPLICATION

(11) **EP 2 388 479 A1**
(43) Date of publication of application: **23.11.2011**
(21) Application number: 10163577.9
(22) Date of filing: 21.05.2010
(51) Int. Cl.: F03D 11/04

(54) **Arrangement to connect a nacelle with a tower of a wind turbine**

(71) Applicant: Siemens Aktiengesellschaft, 80333 München (DE)
(72) Inventor: Rasmussen, Anders Nygaard, 2200, Kobenhavn (DK); Stiesdal, Henrik, 5000, Odense C (DK)

(57) **Abstract**

The invention relates to a wind turbine tower structure (1) for connecting a yaw ring to a wind turbine tower. The structure comprises a substantially circular yaw ring (2), and a steel support structure (8) connected to the yaw ring by a first connection (3) and prepared for being connected to the top of a wind turbine tower by a second connection. Furthermore the steel support structure has a circular cross sectional shape at the first connection, and has a polygonal cross sectional shape at the second connection.
The invention also relates to a wind turbine comprising a wind turbine structure.

## Description

Arrangement to connect a nacelle with a tower of a wind turbine

The invention relates to an arrangement, which is constructed and designed to connect the nacelle of a wind turbine with the tower of the wind turbine.

A nacelle of the wind turbine is placed on the very top of the mast of a tower. The tower and the nacelle are connected by a number of yaw bearings of a yaw system, which interact with a yaw ring. The yaw ring is located between the nacelle and the tower.

By document US 6,814,493 is known to provide on the top of a tower with a circular diameter a flange. The flange is prepared for a connection with the yaw ring.

It is the object of the present invention to provide an improved arrangement to connect the nacelle with the tower of the wind turbine.

This object is achieved by the features of claim 1. Preferred configurations are object of the dependent claims.

The arrangement invented is used to connect the nacelle of a wind turbine with the tower of the wind turbine. It contains a yaw ring and a transition section.

The yaw ring has a cross sectional shape, which is substantially circular. The yaw ring is constructed in a way that the yaw ring interacts with the nacelle and supports the nacelle on top of the tower when the wind turbine is ready for use. Thus it is prepared to engage with the nacelle.

The yaw ring is connected with the transition section. The transition section is constructed in a way that at least a part of the transition section interacts with the tower when the wind turbine is ready for use. The transition section has a cross sectional shape of a polygon. Thus the transition section is prepared to engage with the tower with its second end, while its first end is connected with the yaw ring.

The different shape of the cross sections ensures that the arrangement can be attached to a tower, which has a cross section of a polygon.

The arrangement is used as an adapter in this case. The arrangement allows that different tower diameters and cross sections are fitted to a nacelle.

The arrangement invented allows the use of a "standard produced" yaw ring for the connection intended.

The arrangement invented is especially advantageous for polygon shaped towers, which comprises long rolled steel strips. The steel strips are bolted together by fishing joints for example.

The invention allows the transportation of the tower and of the adapter-arrangement as separate parts to the site of the wind turbine. Thus the transportation is very easy despite the dimensions.

Additionally the arrangement invented does not show through holes for a bolted connection near the yaw ring. Thus the high requirements for joints in this area are avoided.

The advantages applies not only to fishing joint connections, they also apply to any other tower connection including towers, which comprises steel strips, which are connected by overlap connections, which contain single- or double sided splice plate connections, ..., etc.

Preferably the yaw ring is connected with the transition section by a welded connection. Thus a non-bolted and strong connection is obtained, while the arrangement at this section is not weakened. Concentrated high loads can be transferred through the welded connection, which withstands the loads.

Preferably the yaw ring and/or the transition section contain an integrated flange. The flange has a cross sectional shape, which is substantially circular. The flange is used to connect the yaw ring with the transition section.

Preferably the yaw ring and/or the flange are/is connected with the transition section by detachable attachment means or by a welded connection.

Due to the detachable attachments the yaw ring is not influenced by welding needed before or later. The material properties of the yaw ring remain intact and are not influenced by heat introduced when welding on the yaw ring material.

Additionally the yaw ring and/or the flange might be replaced if needed - e.g. in case of damage or tear and wear.

Preferably the flange is attached to the arrangement invented by one or more welding or welding lines. Thus the connection is fixed without the need for bolted connections or bolted joints in this region, which might weaken the whole structure.

Preferably the transition section contains a plurality of through holes, which are prepared to receive bolt-connections. The bolts may be used to connect the whole arrangement invented with the tower of the wind turbine.

This bolt-connections ensure a flangeless connection, which is based on e.g. friction joints, single-sided or double sided splice plate joints, ..., etc.

Preferably the transition section comprises a flange, which has a polygonal cross section or shape. Thus the arrangement invented is prepared for a connection with the tower by a flange-connection. This ensures the connection of tower segments or tower parts in a known and established method.

The polygonal shape of the second connection flange ensures a suitable connection to a polygonal shaped top of a wind turbine tower.

Preferably the polygonal shaped flange is segmented. Thus for each side of the polygonal shape a separate flange segment is provided. This ensures an easy connection to the top of the wind turbine tower top, if the tower also shows a polygonal shaped cross section.

The number of flange segments may not be equal to the number of polygon sides of the tower. One flange segment may cover two or more polygon sides of the top of the tower. Thus the number of welding-connections with the structure is minimized.

Preferably the flange asides the transition section is attached to this section by one or more welding. Thus a suitable and secure connection is obtained.

Preferably the outer-circumference of the transition section is larger than the outer-circumference of the yaw ring. Thus the yaw ring with its certain diameter can be connected to a tower with another, larger diameter very easy.

Thus concentrated high loads at the yaw ring are distributed to a wider area at the transition section. This ensures that the material and connection properties of the transition section are reduced in comparison to the yaw ring.

Preferably the arrangement is made of steel for example and is formed or casted in one section. Thus weak joints are avoided.

The invention is shown in more detail by help of drawings. They show preferred configurations and do not limit the scope of the invention or claims.
FIG 1 shows the arrangement invented in a first configuration,
FIG 2 shows the arrangement invented in a second configuration,
FIG 3 shows the connection of the yaw ring with the transition region, referring to FIG 1 and FIG 2,
FIG 4 shows an enhanced connection of the yaw ring with the transition region, referring to FIG 3,
FIG 5 shows another connection of the yaw ring with the transition region, referring to FIG 1 and FIG 2,
FIG 6 shows another connection of the yaw ring with the transition region, referring to FIG 1 and FIG 2
FIG 7 shows different types of connection between the transition section and the tower, and
FIG 8 shows another connection of the transition section with the top of the tower.

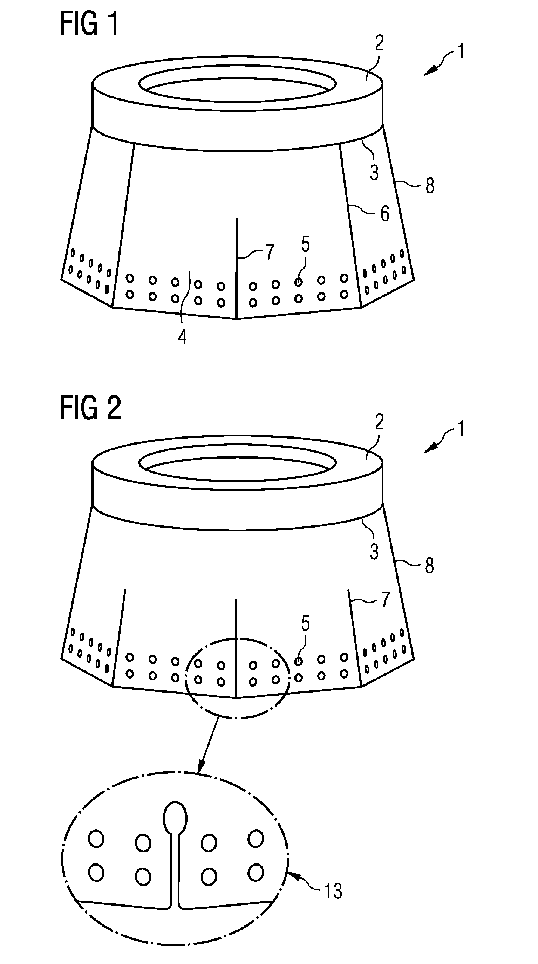

FIG 1 shows the arrangement 1 invented in a first configuration.

The yaw ring 2 is connected with a transition section 8. The transition section 8 contains a number of steel shell elements 4, which are welded together along a welding line 6. The welding line 6 connects the adjacent sides of the steel shell elements 4.

The yaw ring 2 has a cross sectional shape, which is substantially circular and is constructed in a way that the yaw ring 2 interacts with the nacelle and supports the nacelle on top of the tower when the wind turbine is ready for use (not shown in detail).

The yaw ring 2 is connected with the transition section 8 by a connection 3, which is in this case a welding line 3.

The transition section 8 is constructed in a way that at least a part of the transition section 8 interacts with the tower / top of the tower when the wind turbine is ready for use (not shown in detail).

The transition section 8 has a cross sectional shape of a polygon, due to the steel shell elements 4.

The transition section 8 contains on its bottom side, which is aligned to the tower, a number of through holes 5. Corresponding bolts for a bolt-connection are used with this through holes 5 to connect the arrangement 1 with the tower (not shown here).

Each of the shell elements 4 may be flat at a first end and may be curved at a second end to obtain an optimized shape of the cross sections needed.

The connected number of shell elements 4 may constitute the whole transition section 8.

The shell elements 4 may further contain one or more bending 7 to achieve a desired number of polygon sides.

FIG 2 shows the arrangement 1 invented in a second configuration, referring also to FIG 1.

In this case the transition section 8 is formed in one section, by a cold or a hot forming method for example.

The transition section 8 may contain a number of bending 7 to achieve a desired number of polygon sides for the tower if needed.

A circular shape of the yaw ring 2 is still maintained along the connection 3 / welding line 3.

The transition section 8 may further comprise cuts 13, which are located at the bending 7. The cuts 13 allow the distribution of loads, which may act on the bending 7. Thus fatigue defects like cracks are avoided.

The cuts 13 also increase the installation tolerance of the whole transition section 8. Each part between the slices become more mechanical flexible and is adapted better to tolerances of the bolt-connections.

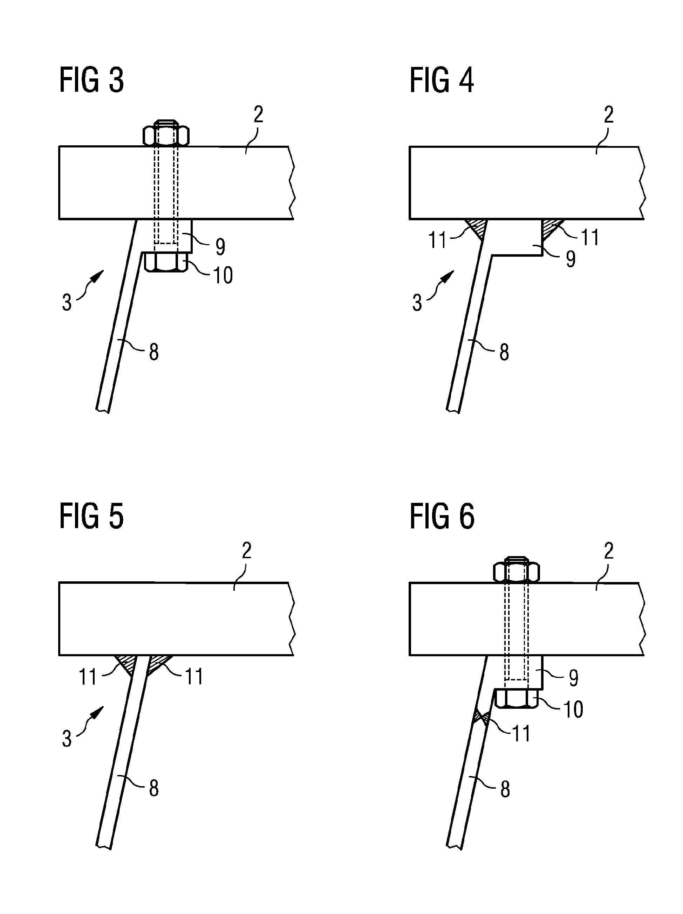

FIG 3 shows the connection 3 of the yaw ring 2 with the transition section 8, referring also to FIG 1 and FIG 2.

The transition section 8 and/or the yaw ring 2 contain an integrated flange 9, which is substantially circular shaped.

The flange 9 is used to connect the transition section 8 and the yaw ring 2 by a bolt connection 10.

The bolt connection may further comprise bolt prolongers to ensure that the connection maintain preloaded.

FIG 4 shows an enhanced connection 3 of the yaw ring 2 with the transition section 8, referring to FIG 3.

Additionally a welding 11 is used to ensure a stabile and strong connection. Thus concentrated high loads can be transferred.

FIG 5 shows another connection 3 of the yaw ring 2 with the transition section 8, referring to FIG 1 and FIG 2.

In this case the yaw ring 2 is simply welded to the transition section 8. Thus a stabile and strong connection between the yaw ring 2 and the transition section 8 is maintained, while concentrated high loads are transferred.

FIG 6 shows another connection of the yaw ring 2 with the transition section 8, referring to FIG 1 and FIG 2.

A flange 9 is attached to the transition section 8 by a welding line 11. The flange 9 is also attached to the yaw ring 2 by a bolt-connection 10.

The flange 9 is prepared to be connected by the welding line 11 along the circumference of the flange 9.

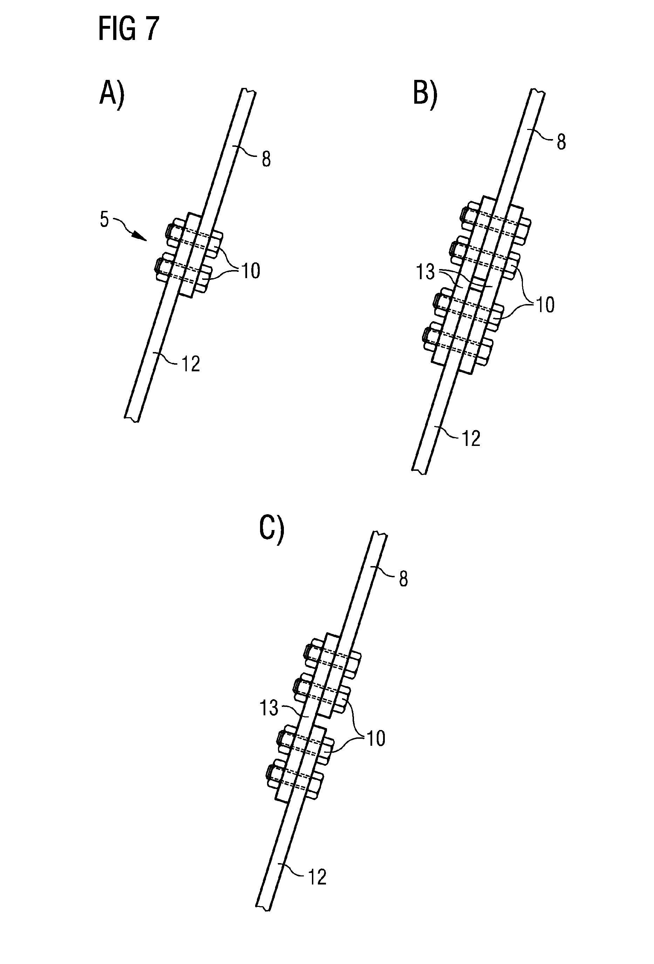

FIG 7a, FIG 7b and FIG 7c show different types of connection between the transition section 8 and an assigned tower 12.

The first embodiment 5, which is shown in FIG 7A, contains a plurality of through holes with bolt-connections 10. The bolt connections 10 are used to connect the transition section 8 with the wall of the top of the tower 12.

The connection shown here is flangeless. The transition section 8 is connected with the top of the tower 12. The connection allows the transfer of high loads from the transition section 8 to the tower 12.

Other embodiments for this connection may contain double sided splice plate joints, as shown in FIG 7b, or single sided splice plate joints, as shown in FIG 7c.

Preferably bolt-connections in the tower-structure itself (excluding possible top flange or yaw ring connections) are only present at the position, where the transition section 8 is connected with the top of the tower 12.

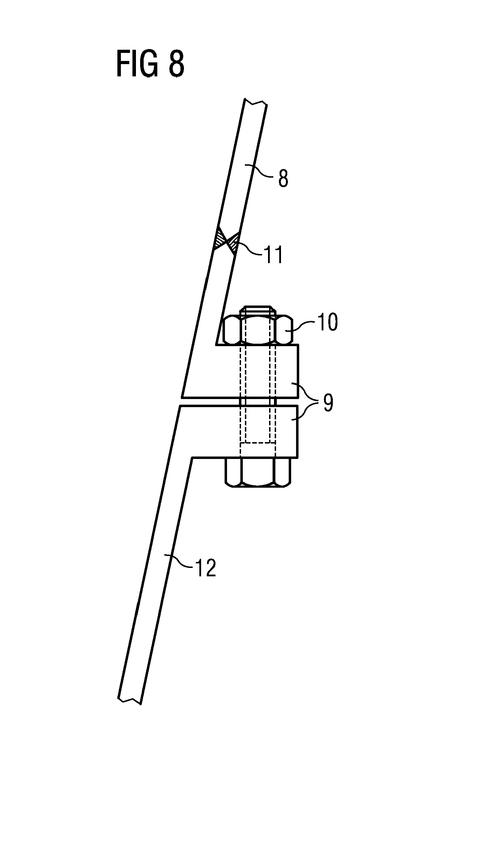

FIG 8 shows another connection of the transition section 8 with the top of the tower 12.

The flange 9 contains by two regions, which are prepared to be connected by a bolt-connection 10 for example.

A first section of the flange 9 is an integrated part of the top of the tower 12, while a second section of the flange 9 is connected by a welding line 11 with the transition section 8.

## Claims

1. Arrangement to connect a nacelle of a wind turbine with a tower of a wind turbine,
- with a yaw ring and with a transition section,
- where the yaw ring has a cross sectional shape, which is substantially circular,
- where the yaw ring is prepared to engage with the nacelle,
- where the yaw ring is connected with the transition section,
- where the transition section contains a first and a second end,
- where the first end is connected with the yaw ring and where the second end is prepared to engage with the top of the tower,
- where the transition section has a cross sectional shape of a polygon at the second end.

2. Arrangement according to claim 1, where the transition section and/or the yaw ring are made of steel to build up a joint support structure between the nacelle and the top of the tower.

3. Arrangement according to claim 1 or according to claim 2, where the yaw ring is prepared to be connected with the nacelle by a yaw bearing of a yaw system.

4. Arrangement according to claim 1,
- where the yaw ring and/or the transition section contains an integrated flange,
- where the flange has a cross sectional shape, which is substantially circular, and
- where the flange is used to connect the yaw ring with the transition region.

5. Arrangement according to claim 4,
- where the flange connects the yaw ring with the transition section by detachable attachment means, or
- where the flange connects the yaw ring with the transition section by a welded connection.

6. Arrangement according to claim 5, where the detachable attachment means contains a bolt for the connection.

7. Arrangement according to claim 1, where the transition section contains a plurality of through holes, which are prepared to connect the transition section with the tower of the wind turbine.

8. Arrangement according to claim 7, where the through holes are prepared to receive a bolt for the connection.

9. Arrangement according to claim 1, where the transition section is at least partly segmented in a way, that the transition section is adaptable to tolerances of the tower diameter.

10. Arrangement according to claim 9,
- where the transition section contains a flange, which is aligned to the tower for connection purposes,
- where the flange has a cross sectional shape of a polygon, and
- where the flange is segmented to allow its adaption to various tower diameters.

11. Arrangement according to claim 10, where the flange of the transition section is connected by a welded connection with the transition region.

12. Arrangement according to claim 1, where the outer circumference of the yaw ring, which is aligned to the nacelle, is smaller than the outer circumference of the transition region, which is aligned to the tower.

13. Arrangement according to claim 1, wherein the yaw ring and the transition section is formed in one section.

14. Arrangement according to claim 1, where the tower has a cross sectional shape of a polygon.

15. Arrangement according to claim 1, where the transition section has a cross sectional circular shape at the first end.

16. Wind turbine, which contains an arrangement according to one of the claims 1 to 14.
